# EUROPEAN PATENT SPECIFICATION

(11) **EP 3 013 151 B1**
(45) Date of publication and mention of the grant of the patent: **08.01.2020**
(21) Application number: 14759054.1
(22) Date of filing: 19.06.2014
(51) Int. Cl.: A23F 5/32, A23F 5/38, A23F 5/40

(54) **COFFEE PRODUCT**
KAFFEEPRODUKT
PRODUIT DE CAFÉ

(30) Priority: 24.06.2013 GB 201311188
(43) Date of publication of application: 04.05.2016
(73) Proprietor: Koninklijke Douwe Egberts B.V., 3532 AD Utrecht (NL)
(72) Inventor: PENNER, Amy, L., Oxford Oxfordshire 0X2 6AQ (GB)
(74) Representative: Boult Wade Tennant LLP
(86) International application number: PCT/IB2014/001563
(87) International publication number: WO 2014/207555

(56) References cited:
- EP-A1- 1 815 750
- GB-A- 2 394 163
- GB-A- 2 496 265
- US-A- 3 804 960

## Description

This disclosure relates to a method for forming a coffee article suitable for forming a coffee beverage. The method relies on the freeze-drying of a shapeable coffee mousse and provides a useful alternative to conventional freeze-dried coffee granules. The disclosure further relates to the application of these articles to the preparation of a coffee beverage.

Instant coffee granules have long been used by consumers to prepare coffee beverages at their convenience. A spoonful of granules is generally sufficient to provide a standard coffee beverage on dissolution with hot water. In order to avoid the need for a spoon and to help achieve the ideal dosing of coffee, it is known to provide the coffee in the form of a single-serve compressed coffee tablet. US2006/0024420 discloses a coffee tablet formed using a mould. However, such tablets are prone to damage during transit and are, therefore, manufactured with high compression and provided in low surface area shapes, such as discs or pellets.

Highly compressed coffee tablets have a low solubility and it is often the case that a spoon is still required to stir the beverage after the addition of the hot water. It is speculated that the brittle form of coffee tablets has prevented the widespread adoption, since any apparent damage lessens the impression of product quality. It is also considered that the utilitarian form of known coffee tablets will lack appeal to the consumer.

US2007184173 relates to a method of forming a foamed food product using a mould. The method relies upon one or more additives, such as a gelling agent, particularly a food jelly and, if necessary, a sweetener, particularly sugar.

CA984216 relates to a method of drying a foamed coffee extract.

US3482990 relates to a method of freeze-drying a foamed aromatic material. The method involves depositing a foamed ribbon onto a freezing belt. In order to form a ribbon, the material must be able to flow when poured.

AU2002237290 relates to a method of making water soluble powders and tablets which foam.

GB1240842 relates to a process for the manufacture of dried instant coffee.

GB 2496265 discloses a process for forming instant coffee comprising finely ground coffee.

US 3804960 discloses a method of preparation of an extract for freeze drying.

EP 1815750 discloses a freeze-dried foam having coffee as a main ingredient

GB 2394163 discloses freeze-dried coffee tablets.

Accordingly, it is desirable to provide an improved coffee article for forming a coffee beverage and/or tackle at least some of the problems associated with the prior art or, at least, to provide a commercially useful alternative thereto.

Accordingly, in a first aspect the present disclosure provides a method for forming a coffee article for preparing a coffee beverage, the method comprising:
providing a liquid coffee-extract;
foaming and cooling the liquid coffee-extract to obtain a shape-retaining coffee-extract mousse, and
shaping and freeze-drying the mousse to obtain a coffee article, having a mass of from 0.3 to 5 g. wherein the coffee extract comprises finely ground roasted coffee and the shaping is conducted with the mousse at a temperature of from -8 to -12°C, wherein the coffee extract comprises finely ground roasted coffee in an amount of from 1 to 50% by weight of the total coffee solids, and wherein the finely ground roasted coffee has a D50 of from 5 to 60 microns.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

A coffee article as defined herein refers to a discrete body of coffee. The article will have an expanded structure including pores that result from the foaming step during manufacture. Since the article is freeze-dried, the article will have an open porosity that aids rapid dissolution. The article may, nevertheless, have a smooth outer surface or may have pores visible therein.

The coffee article will generally have a mass of from 0.3 to 5g. The typical amount of coffee used to prepare a cup of coffee is from 1 to 1.5g (100ml), whereas the amount required for a mug of coffee is around 2-3g (250ml). Depending on the mass of the article, a number of the articles may be required to produce a single beverage. For example, a consumer may elect to form a beverage from one or a plurality of the coffee articles, depending on the desired beverage strength. For example, in a preferred embodiment where the articles have a mass of from 0.75 to 1g, the end user may elect to use from 1 to 3 articles in a beverage to produce a weak, normal or strong beverage. The coffee article preferably has a volume of at least 1cm³, more preferably from 1 to 10cm³, most preferably from 2 to 5cm³. The most preferred volume is from 3 to 4.5 cm³ This volume allows for easy handling and a density that allows for fast dissolution.

A liquid coffee-extract is an aqueous extract comprising coffee solids. Such extracts are well known in the art as the precursor ingredient for use in the manufacture of instant coffees. The coffee extract will generally be the result of a hot aqueous extraction performed on roasted and ground coffee beans. The extract will preferably contain from 30 to 60% coffee solids (by weight of the total coffee extract). More preferably the coffee solids are 40 to 55% and most preferably about 50%. The most preferred range is from 45 to 50%. This level of solids allows the liquid coffee extract to be provided with a large amount of foaming. Where the solids levels are too low the freeze-drying step will be inefficient due to the large amount of water that needs to be removed. When the solids level exceeds 60% the ease of handling and transferring the extract is reduced.

The step of foaming involves the introduction of gas into the coffee extract. This may be achieved by mixing the extract to entrap gas from the atmosphere above the extract. Alternatively and preferably the step of foaming the liquid-coffee extract is by injection of gas into the liquid-coffee extract. The gas injected is preferably air for simplicity and cost advantages. The gas may alternatively be a substantially inert gas such as carbon dioxide or nitrogen, although carbon dioxide is less preferred. The foaming is preferably carried out until a desired density has been achieved. This can be measured by observing the volume of the known mass of coffee extract.

The liquid coffee-extract needs to be shapeable and this is achieved in part by cooling the extract below ambient temperature and preferably to the temperatures disclosed herein for the shaping step. The extract may be partially or fully cooled before foaming, during the foaming step or after the foaming. Preferably the extract is simultaneously cooled and foamed. One preferred method for cooling the extract is to foam the extract with cold gas. This efficiently cools and simultaneously foams the extract.

A mousse as defined herein is an expanded structure having a light and airy texture formed from the coffee extract trapping bubbles of trapped gas. The mousse is desirably self-supporting in the amounts required to form the desired article. In this way, the article will be able to maintain sharp texture features, such as a ridge or edge. A mousse can range from light and fluffy to creamy and thick and does not include rigidly frozen or brittle structures.

By "shape-retaining" it is meant that the mousse is both shapeable and able to hold a given shape or detail for at least a 20 seconds after shaping, preferably for at least 1 minute and preferably for at least 10 minutes. Thus, rigidly frozen structures are not considered to be shapeable and structures having features that collapse quickly under their own weight are not considered to be able retain their shape. Examples of shapes and details include sharp edges and 3D shapes and structures. The mousse should, for example, be able to hold a recognisable 2cm³ cube shape for at least 20 seconds and preferably at least a minute.

The mousse contains a fine roasted coffee and the temperatures for shaping are from -8 to -12°C, more preferably from -9 to -11°C. At these temperatures, the extract has been found to have a self-supporting shapeable foam. It is speculated that the fine roasted coffee increases the ability of the foam to be self-supporting at warmer temperatures by providing some additional internal structure to the mousse. At warmer temperatures the foam will tend to collapse or melt away. At colder temperatures the foam will be overly rigid and it will not be possible to shape the foam without brittle fracturing.

The step of shaping the mousse can be carried out in various different manners as discussed herein. Preferably the only shaping step is carried out before the step of freeze-drying. That is, preferably, there is no post-freeze-drying grinding or similar finishing step. This simplifies the production while avoiding the risk of damage to any shaped features. Preferably there is no grinding step conducted at any point in the process.

Preferably the method described herein further comprises a step of packaging the coffee article. The coffee article may be packaged singly or with multiple articles in a single container. The container may be, for example, a display box, cartridge, sachet, capsule, pod or pad. These containers are well known in the art.

The coffee article may be shaped as desired and need not be in a disc or conventional tablet form. It has been found that the method disclosed herein allows for complex shaping features, such as ridges, to be obtained. In worked examples, for example, the mousse was deposited through a star-shaped icing bag nozzle and retained the sharp detail following freeze-drying.

The present disclosure provides an alternative to freezing a liquid coffee extract in a mould when providing a coffee article. The temperature of the liquid coffee extract is reduced before the step of shaping which provides the mousse in a shapeable form and avoids the disadvantages associated with freeing the extract from a mould. In addition, sharper textures and lower densities can be achieved compared to those obtained by filling moulds.

It is known to produce an instant coffee product by spray drying or freeze-drying a liquid coffee extract, also referred to as coffee liquor. Indeed, freeze-drying is well known in the art. The final step in freeze-drying is to lower the pressure of the atmosphere around a water-containing slab of frozen coffee extract. This causes the water to sublime and leave a slab of freeze-dried coffee. To provide a final granule the slab is broken up or ground. Alternatively, the slab is broken up before the freeze-drying step. This latter approach is more efficient due to the larger surface area for water sublimation.

This step of breaking up the coffee is normally achieved by grinding. Grinding introduces an amount of heat into the frozen coffee due to the friction. If the heat is too great then the coffee may melt; this can cause agglomeration or, at least, a loss of the crisp form that is advantageously provided by freeze-drying. Accordingly, it is conventional to freeze the material at a very low temperature (around -50C) to ensure that the coffee is fully frozen before grinding and drying.

Before drying it is necessary to form the slab of coffee extract. As a general rule, as liquids get colder the viscosity of the fluid increases until it is frozen. Since the coffee needs to be finally frozen, it is advantageous for handling the coffee if it is chilled and viscous when the slab is formed. Furthermore, the extract may undergo a foaming step to impact the final density of the product. Significant foaming can provide a low density instant coffee granule. The use of a colder extract helps maintain the foamed structure for longer. After the foaming step, the coffee is still flowable and takes the shape of the container used in which to freeze it. This coffee is not in a mousse form.

The most common way to shape the frozen coffee is grinding then, optionally, further processing such as sieving and/or freeze drying. Alternatively, the concentrated coffee liquor may be frozen within a mould such that the liquid takes the shape of the container before further processing. This latter approach has several disadvantages for the processing. For example, the use of a mould leads to a fixed process dimension. Accordingly, changing the product shape requires that many additional moulds be used. This heavy reliance on moulds is disadvantageous through storage, change-over, and cleaning. This also has the inherent risk of the product becoming damaged, such as chipping or breaking when it is released from the mould.

The processing techniques described herein, however, has a high efficiency compared to conventional instant coffee manufacture as described above. Since the final product is not subjected to a grinding step (it is in a desired shaped form), there are no waste fines resulting from grinding. Moreover, simply avoiding a grinding step is desirable for the improved efficiency. However, unexpectedly, because there is no grinding step it has been found that the extract does not need to be so cold before drying, therefore warmer freeze-drying temperatures may be used, which is more efficient. For example, the articles may be cooled to around -30 to -20°C before drying in the freeze-drying process.

The freeze-drying step according to the present invention occurs after the shaping step. The shaped mousse is subjected to a reduced pressure to provide a freeze-dried product. Preferably the mousse is further cooled before drying to avoid any damage to the shape features caused by the out-flow of gases from the structure.

This proposed method and product has a number of further advantages over conventional instant coffee compositions. In particular, the article can be used to provide a fixed dose for the consumer. For example, a dose of one, two or three articles might provide the intended dose in a mug of hot water. Advantageously, the form of the articles also means that there is no need for a teaspoon to dispense the beverage ingredients.

It is also considered that a high variety of shapes available. As a result, an impression of a high apparent value can be achieved with individual decorative articles.

The present inventors have also discovered that the inclusion of roast and ground coffee in the coffee extract has a number of advantages. It provides a beverage with an improved and more authentic coffee taste. It improves the foaming that is achieved and, in particular, it improves the stability of the foamed extract. This improved stability allows the formation of the self-supporting and shapeable coffee extract at warmer temperatures. The use of warmer temperatures throughout leads to efficiency savings as well as improved handle-ability.

In addition, the avoidance of a moulding step allows one to easily change size and shape of the finished product. This leads to greater flexibility, eliminating moulds which would be stored when not in use. This process provides a way to create complex 3-D shapes without expensive moulding equipment.

Indeed, the inventors have found that once the coffee has been cooled with the appropriate foam density, it will hold a three dimensional shape. Various non-limiting methods for producing such a shape will now be described.

The shapeable coffee extract may simply be deposited. This may involve extrusion of the extract, for example, using a piping bag normally used in frosting cakes. On an industrial scale, extrusion systems suitable for this method would be known to one skilled in the art. The coffee depositing is preferably done onto a cold surface to ensure that the coffee does not melt and thus would lose the shaping. For example, this may be carried out, even at ambient temperature if the contact surface for the deposition is sufficiently cold. The deposited material will then be transferred to a freeze-drier. By way of example, the deposition plate may be at -65C or -50C and placed within 1 minute was placed into the freezer. In trials, both environments allowed coffee samples to be shaped. The extremes in testing show that it is not necessary to have a certain environment for testing, but rather that the coffee itself must remain cool to avoid melting.

Industrial techniques for depositing compositions with similar properties are well known in the art. For example, US6182556 discloses an apparatus for preparing confectionary such as jelly babies.

The shapeable coffee extract may be drop rolled. In this technique, coffee is fed through a commercial drop roller. The drop roller has indentations within both sides of the rollers. As the feed material is fed through the rollers, it takes is pressed into the grooves and holds the shape of the indentions.

The shapeable coffee may be individually or mechanically scooped and deposited. When performed manually, this may rely on an ice-cream scoop or similar.

Preferably the extract is shaped by deposition, in particular by extrusion. This leads to a high flexibility in the products that can be produced, while allowing fine surface detail and, due to larger surface areas, easier drying of the articles.

Preferably the mousse has a density of from 400g/L and 1000 g/L. More preferably the mousse has a density of from 500g/L and 800 g/L. The lower density mousse has a higher internal surface area and is easier to freeze-dry. In addition, the lighter mousse leads to a larger final product that increases handle-ability. Higher density mousses lead to products that are more robust during transit, but tend to have a lower solubility and are less desirable.

Preferably the coffee-extract comprises finely ground roasted coffee in an amount of from 1 to 50% by weight of the total coffee solids. More preferably, the coffee-extract comprises finely ground roasted coffee in an amount of from 5 to 25% by weight of the total coffee solids, more preferably from 10 to 20wt% and most preferably from 10 to 15%. These solids are included in the total coffee solids present in the coffee extract. The inclusion of the finely ground roasted coffee has been found to improve the stability of the mousse at higher temperatures for shaping. Furthermore, the addition has been found to provide an improved final beverage quality.

The finely ground roasted coffee preferably has an average particle size (D50) of from 1 to 60 micrometers, preferably from 5 to 20 micrometers. In some embodiments, the D50 may be from 30 to 50 micrometers. The D90 is preferably less than 150micrometers, more preferably less than 100 micrometers and most preferably less than 50 micrometers. The D100 is preferably less than 2000 micrometers, more preferably less than 1000 micrometers and most preferably less than 250 micrometers. A particularly preferred particle size range has a D100 of less than 60 micrometers, a D90 of less than 30 micrometers and a D50 of less than 12 micrometers. The finer particle sizes leads to less sedimentation. The narrow distribution of particle sizes also appears to provide improved foam stabilisation.

The particle size of the fine roast and ground coffee powder can be measured using a Malvern Mastersizer 2000. The sample should be dispersed in water, "pump/stirrer speed" at 2500 rpm (out of 3500rpm); Obscuration level of 10-20%; Ultrasound applied 30-60 seconds prior to measurement starting and continuously throughout measurement at 50% power. All samples should be measured in triplicate with 15 second delay between sample readings and all triplicate samples averaged.

A single-serving coffee article for preparing a coffee beverage is disclosed herein, the article comprising soluble coffee and from 1 to 25wt% finely ground roasted coffee and having a mass of from 0.3 to 5 g and a density of at most 0.9g/cm³. The beverage is preferably a coffee beverage with a foam thereon. The provision of such an article leads to a fast dissolution rate (due to its low density) with the taste and appearance of an authentic coffee beverage.

By single serving it is meant that the article should be sufficient to provide a coffee beverage, such as from 100 to 250ml of coffee alone when reconstituted with hot water (not including the addition of milk or sugar to taste). Nevertheless, it is also considered that, as described above, a consumer may elect to use one, two or three single serving articles to achieve their desired beverage strength. The expected final solids level in the finished beverage is from 1 to 1.5wt%.

Preferably the single-serving coffee article has a mass of from 1 to 2 g as described above. This is sufficient coffee to impart ideal strength to the final coffee beverage. The preferred density is from 0.2 to 0.5g/cm³. This provides a large expanded shape that is convenient to handle. If the density is too low then the article may be overly fragile. If the density is too high then the size will be reduced and the solubility may also be affected.

The density of the article can be measured by helium pycnometry and such techniques are well known in the art. The measurement is per article and not a bulk density of multiple articles.

In a second aspect the present disclosure provides a method for preparing a coffee beverage, the method comprising contacting one or more coffee articles as described herein with an aqueous beverage medium. Preferably the aqueous medium is warm or hot water, preferably having a temperature of from 75 to 100°C, more preferably from 80 to 90 °C. This allows for quick solubility when producing a beverage. In another embodiment, colder medium may be used to produce a cold final beverage, such as a frappe. In another preferred embodiment, the medium may be milk, such as to provide an instant macchiato.

In a third aspect the present disclosure provides a container comprising one or more coffee articles described herein the container being in the form of a display box, cartridge, sachet, capsule, pod or pad.

In a fourth aspect the present disclosure provides system for preparing a beverage according to the method disclosed herein, the system comprising a beverage preparation machine having a receiving chamber for the one or more coffee articles or a chamber for receiving the container as described herein.

In a fifth aspect the present disclosure provides for the use of a finely ground roasted coffee in a shaped coffee-extract to increase the temperature at which the extract is self-supporting before freeze-drying.

Preferably the coffee product described herein is made from a coffee extract consisting of soluble coffee solids and water, optionally together with the roast and ground coffee additive described above. That is, the product preferably consists of coffee and does not include other ingredients such as sweeteners, gelling agents, binders or the like.

The invention will be described in relation to the following non-limiting figures, in which:

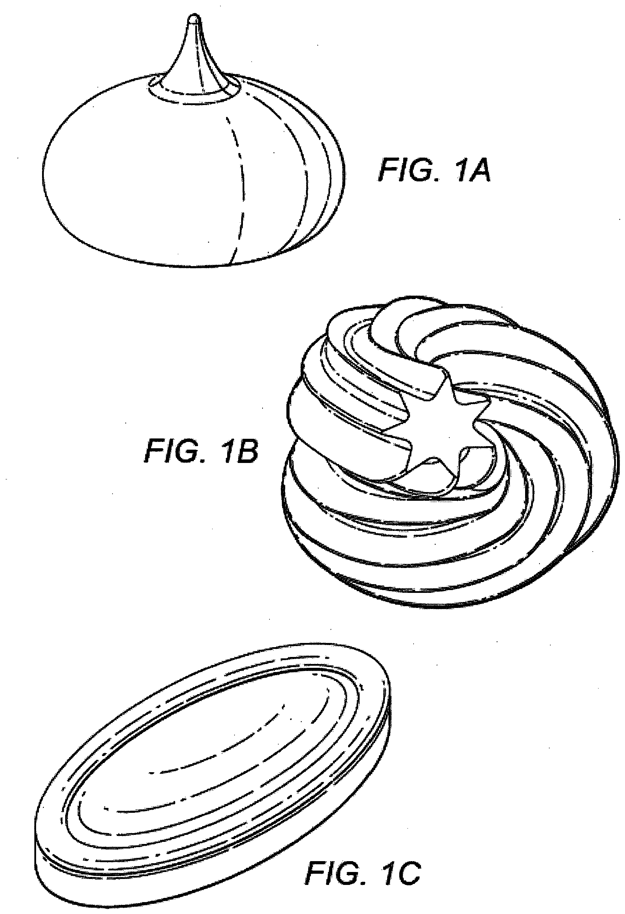

Figure 1 shows a number of coffee product shapes prepared by the method disclosed herein. In Figure 1A the shape has been deposited. In Figure 1B the shape has been extruded using a star shaped nozzle and formed into a spiral. In Figure 1C the shape has been drop rolled.

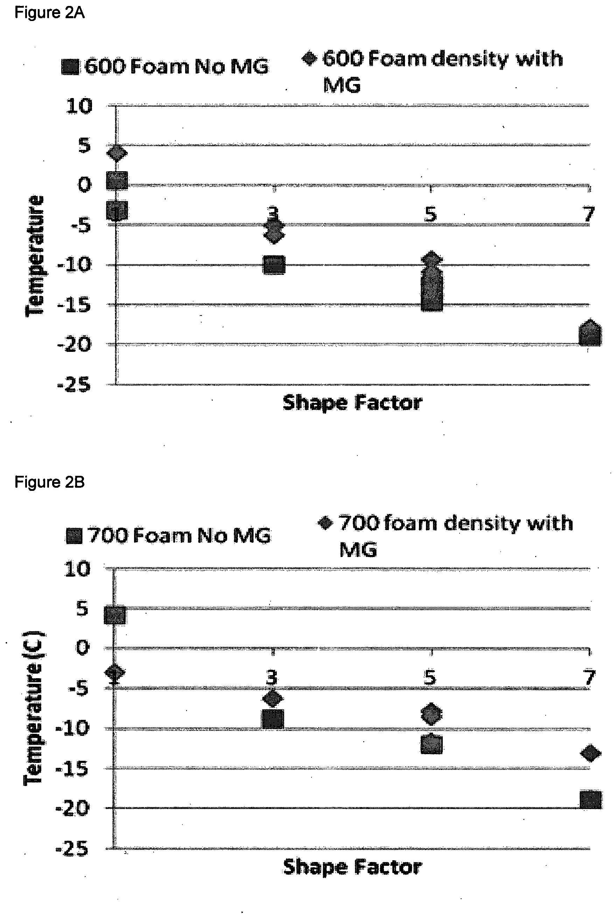

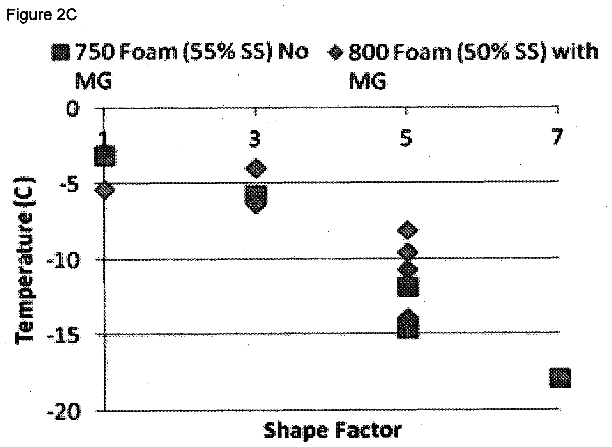

Figure 2 includes three graphs that demonstrate effects of varying the parameters of the liquid coffee-mousse. Figure 2A demonstrates the effect of microground coffee on the temperature that provides an ideal shapeable coffee mousse for a liquid coffee extract having 50wt% solids and a foamed density of 600g/L. As demonstrated, optimum (5) shapeability is achieved approximately between -9 and -15°C. Moreover, the range for a liquid coffee extract without added roast and finely ground coffee is approximately from - 12 to -15°C, whereas the range for extract with added roast and finely ground coffee is from -8 to -12°C. As is demonstrated in this graph, the addition of microground coffee raises the temperature at which the expected shapeability can be attained.
Figure 2B demonstrates the effect of microground coffee on the temperature that provides an ideal shapeable coffee mousse for a liquid coffee extract having 50wt% solids and a foamed density of 700g/L. As demonstrated, optimum (5) shapeability is achieved between -8 and -12°C. Moreover, the range for a liquid coffee extract without added roast and finely ground coffee is about -12°C, whereas the range for extract with added roast and finely ground coffee is from -8 to -12°C. As is demonstrated in this graph, the addition of microground coffee raises the temperature at which the expected shapeability can be attained.
Figure 2C demonstrates the effect of microground coffee on the temperature that provides an ideal shapeable coffee mousse for a liquid coffee extract. Here a 55% solids microground-containing sample having a foaming density of 750g/L is compared against a sample without microground and having 50wt% solids and a foamed density of 800g/L. As demonstrated, optimum (5) shapeability is achieved between -8 and -15°C. Moreover, the range for a liquid coffee extract without added roast and finely ground coffee is about -12 to -15°C, whereas the range for extract with added roast and finely ground coffee is from -8 to -14°C. As is demonstrated in this graph, the addition of microground coffee raises the temperature at which the expected shapeability can be attained.
Figure 3 is entitled: Shape as a function of moulding temperature for 50% solids. Figure 3 shows a graph of the shapeability at various temperatures for a liquid coffee extract having 50% solids at various (unlabelled) foaming values. For an optimum shapeability the range is from -12 to -21°C
Figure 4 is entitled: Shape as a function of foam density. Figure 4 shows a graph of the shapeability at various foam densities for different solids amounts (50%, 30% and 55%). The general trend shows that higher solids content permits lower foamed densities to achieve the optimal shapeability (5).

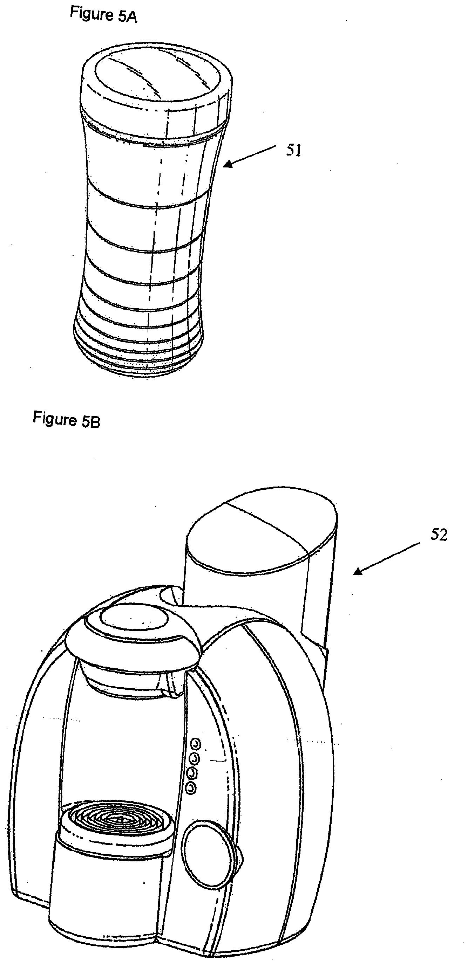

Figure 5A shows a container (51) for holding one or more coffee articles. Figure 5B shows a beverage preparation machine (52). Such a machine would be able to take a cartridge containing one or more coffee articles as described herein.

The invention will now be described in relation to the following non-limiting examples.

### Examples

The disclosure relates to a concentrated coffee liquor (preferably 30% to 60% total solids) which has been aerated and cooled to a temperature preferably in the region of -8 to -17C, to create a viscous mousse. The mousse preferably has a foam density between 400g/L and 1000 g/L, with an ideal foam density between 500-800g/L. In the development of this product, articles were formed by cooling and foaming concentrated coffee liquor which was then cooled to different temperatures and the ability to hold a shape was measured.

The term "shape factor" was created to describe how well the mousse held a shape. A level 1 indicated a flowable liquid (not able to hold shape). Level 3 was a semi-soft mass, not able to hold a 3-D shape for 20 seconds. Level 5 was a coffee mousse that held a 3-D shape when formed. Shapes were formed through depositing as well as shaping with an ice cream scoop. If the scooped coffee mousse held the ice cream scoop shape, it was given a level 5. A mousse which was too firm to mould was given a shape factor of 7. Formed shapes were placed on a -50C plate to further freeze before freeze drying.

In a first comparative example, Coffee extract at 33% coffee solids was frozen using a lab scale ice cream maker (Cuisinart® ICE-50BC Supreme commercial Quality Ice Cream Maker) to generate foam and cooling. Prior to cooling, the coffee extract had a foam density of 1000g/L at 21C. This extract was liquid and did not hold a shape (shape factor 1). After cooling for 1 hour in the ice cream maker the foam density of was reduced to 680 at -6C, this product was semi-soft (shape factor 3) and is similar to current processing. Further temperature reduction to -9C, gave a coffee mousse that was able to hold 3-D shapes with an ideal texture at -12C and then was too firm at -15C (shape factor 7).

In a second unsuccessful (comparative) example, unfoamed Coffee extract at 33% solids was placed in the freezer to determine if freezing alone would be enough to create a mousse that could hold a shape. The coffee extract had a foam density of 1000g/L at 21C. As the product got to -4C, it was slushy, and at -9C it was too firm to mould. (Example 3, Cold Form Shapes).

In a third comparative example, unfoamed Coffee extract at 33% solids was placed in the freezer to determine if freezing alone would be enough to create a mousse that could hold a shape. The coffee extract had a foam density of 1000g/L at 21C. As the product went to -4C, it was necessary to stir the concentrated coffee extract such that it would not freeze as a solid block. As the product was stirred, air was incorporated into the coffee liquor and the foam density was reduced from 1120 g/L to 934 g/L. At -5.5C, the slightly foamed extract was not able to hold shape (shape factor 3), but at -9C, the product was shape factor 5.

In a fourth example, a Coffee extract at 50% and 60% solids, containing microground coffee (Kenco Millicano) was flowable at the different concentrations at room temperature (T>20C) and a foam density of ∼900-1000g/L. The concentrated extracts were placed in a lab scale ice cream maker (Cuisinart® ICE-50BC Supreme commercial Quality Ice Cream Maker) to cool and aerate. For 50% and 60% solids, the ideal shaping parameters were at 700g/L foam density and -9 to -12C. The presence of microground coffee did not significantly alter the ability to form shapes using concentrated coffee extract at similar temperature (-9C and -12C for microgrind and without microgrind, respectively) and foam density (734 and 700g/L, respectively).

Commercial chilling and foaming is done using a commercial ice cream maker (Tetra Hoyer Frigus). Concentrated coffee extract was placed through the ice cream maker and allowed to chill and foam. Product was collected at various foam densities and placed in the -50C freezer to cool. The temperature and shape forming ability were monitored. These were charted to find the optimum range where the coffee mousse could be formed into a 3-D shape. It was found that a range of foam densities between 400 to 1000g/L and temperatures below -8C to -17C was ideal.

### Examples relating to shaping techniques

In a first comparative example, a deposition technique was investigated. A #18 Wilton star tip was used. This was used to show that the fine texture and detail of the tip were not lost when the icing was piped or deposited out of the bag using a slight amount of pressure (squeezed out by hand). Samples were 5mm to 20mm in height and diameter/length were 5-20mm. However, larger samples could be produced without restriction on the technique. All samples dried well at 5C for 24hrs at 0.40 mbar within the freeze dryer. Samples were 0.2g -0.5 grams/piece.

Larger samples were tried, but it was found that this technique was not ideal for larger samples under standard drying conditions. Such samples were extremely brittle after drying (5C for 24 hrs at 0.40 mbar) and some melt-back was also seen with very large samples. The geometry of the structure (large volume to the surface area) made it difficult for the water vapour to sublime. A more gentle freeze dryer profile (-10C) is considered likely to enable larger structures to dry correctly.

In a second comparative example, a further deposition technique was investigated. A #4 Wilton writing tip was used. Samples were made using a smooth tip and the coffee was piped into a small drop. Circular and oval drops were formed with a 5mm to 15mm diameter. The height was 0.5 to 12mm tall. Long strips were also piped which were 5mm to 20mm wide and the length was not restricted (30mm to 300mm, but could be any length). Height was <15mm. All samples dried well at 5C for 24hrs at 0.40 mbar within the freeze dryer.

This could be commercially replicated using commercial equipment using depositing heads used in the chocolate, frosting, or candy industry. Preferably the depositing equipment would be chilled to preserve the temperature of the coffee extract. It was seen from the data that as the coffee warms, the ability to hold a shape decreases.

In a third comparative example, drop rolling was trialled. Two styles of shapes (oval with a ridge edge and a square with a grooved centre) were used and both were able to successfully produce a shape. The square shape was 20mm (length and width) and 5 mm thick. The oval was 30mm long (longest point) and 13mm wide (widest point) and 5 mm thick. These shapes were dried at 5C for 24 hrs at 0.40 mbar and were 0.4 to 0.7 g/piece. The drop rollers used were borrowed from the chocolate industry and could be commercially used.

In a fourth comparative example, a small ice cream scoop (42mm inner diameter, 25mm radius) was used to form shapes made into a half sphere. The coffee was scooped and then flipped out onto a metal tray. The ice cream scoop had a small inner scraper that enabled the coffee to be easily flipped out and onto the tray while still maintaining a smooth outer surface or a surface texture similar to ice cream. The coffee held the shape of the semi-circular scoop. The coffee struggled with drying due to the volume of the articles, but the shaping process was easily done.

The ice cream industry commonly forms ice cream into a shape. This process behaves similarly and thus future work to shape using.this method could borrow techniques from the ice cream industry.

### Examples relating to forming the shapeable coffee extract with roast and around additive

A cold-formable extract was produced in a pilot plant using Kenco Really Rich ™ extract and blended with a micro-ground coffee. There was 15wt% microground coffee in the finished product. The Extract was 'cold-formed' and freeze dried to produce coffee 'nuggets'.

The presence of "microgrind" in concentrated coffee extract created a product that was able to form a complex three dimensional shape. The shapes were formed at temperatures higher than their counterpart samples (same concentration and same foam density) without microgrind. The microgrind is believed to aid in the ability to form a structure (added cellulose and coffee oil which would be solid) and reduce the temperature input needed.

Kenco Really Rich ™ extract was collected from the plant (-50% soluble solids) and stored in the +5C anteroom of the pilot plant (for 24 hrs, max 48 hrs). The extract was diluted to 45.6% soluble solids and microgrind was added to achieve 50% total solids in the final blend (microgrind stored in the -40C freezer and then kept in the +5 C anteroom prior to use). Mixing took place using a Silverson benchtop mixer and was additionally stirred/whisked by hand to ensure that all lumps were removed and broken up. This took 10-15 minutes per batch. Small batches were used in the Hoyer (scrape surface heat exchanger).
Blended extract was added to the Hoyer and started-up as standard procedure according to the work instructions. Target densities (g/L) were: 600, 700, and 800.

Samples were collected in plastic pots (1L) as the plastic reduces the heat transfer rate for the product and allows for a more accurate measurement of the temperature and shaping ability. Standard practice is to place the coffee extract on the metal trays. However, this cools the coffee extract too quickly to get enough data points due to the high heat transfer of the stainless steel. Temperature and shape factor were recorded for each density.

Shape Factor: 1 = fluid, 3 = semi-soft, doesn't hold shape; 5 = able to mould and hold shape; 7 = too firm

| **Foam Density** | **Temperature** | **Texture** |
|---|---|---|
| 700 | -3 | 1 |
| 700 | -6.2 | 3 |
| 700 | -18.8 | 7 |
| 700 | -11.6 | 5 |
| 700 | -7.8 | 5 |
| 700 | -8.5 | 5 |
| 700 | -13.1 | 7 |
| | | |
| 800 | -5.4 (outlet) | 1 |
| 800 | -9.6 | 5 |
| 800 | -10.7 | 5 |
| 800 | -8.1 | 5 |
| 800 | -6.4 | 3 |
| 800 | -4 | 3 |
| 800 | -18 | 7 |
| 800 | -13.9 | 5 |
| | | |
| 600 | -5.4 (outlet) | 1 |
| 600 | -12.9 | 5 |
| 600 | -11.6 | 5 |
| 600 | -10.9 | 5 |
| 600 | -9.3 | 5 |
| 600 | -17.9 | 7 |
| 600 | -6.3 | 3 |
| 600 | -5.1 | 3 |

Drop rollers were used in the -50C cold room, but this was too cold for the foamed extract. Some shapes were formed, but stuck to the rollers and could be peeled off. Repetition was improved by working with the rollers in the -18C cold room.

Samples were placed into an icing piping bag with a coupler but no tip. Samples were piped into a small oval (∼6g, wet; 3 g solids) and remained in the freezer until freeze drying.

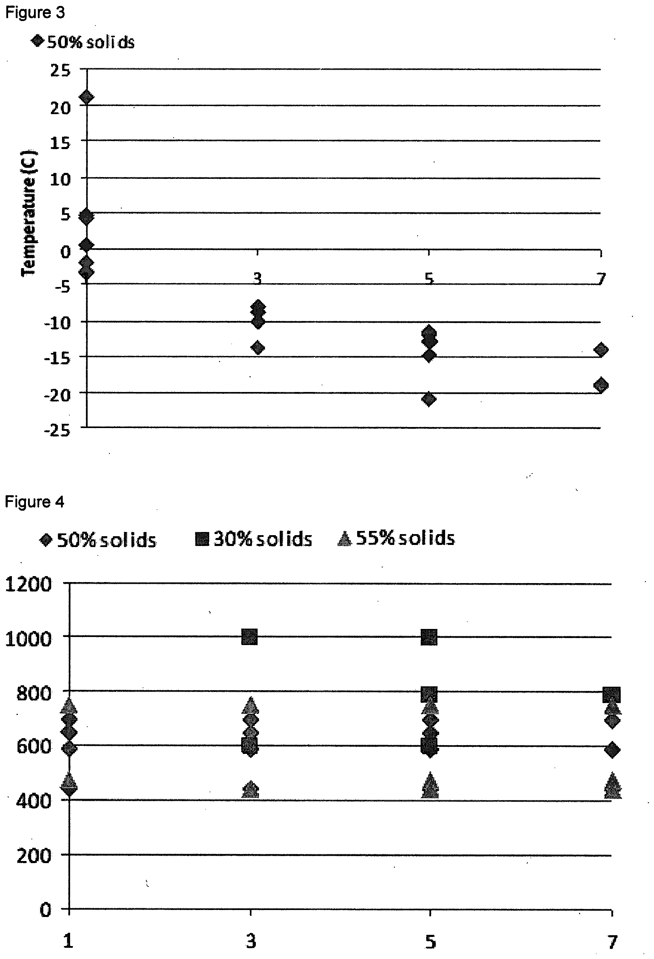

Adding microgrind to coffee extract (50% solids) raised the temperature in which the concentrated coffee extract was able to hold a complex three dimensional shape (shape factor 5). The presence of microgrind is believed reduce the temperature required for shaping the product because the insoluble coffee solids (R&G fraction) aid in the structure of the product as seen for the samples at 600g/L and 700g/L foam density. Samples at 800g/L foam density with Microgrind (50% solids) vs. samples at 55% solids and no Microgrind are compared in Figure 3. The key take-away from this is that adding microgrind raises the temperature to form a 'shape-able (5)' product more than just adding soluble solids. The insoluble coffee solids (coffee cellulose and coffee oil (melting point of 5C, thus would be solid)) are a bigger benefit in shaping the product than adding more soluble solids.

In 600, 700 and 800 foam density (g/L) extract, the presence of microgrind raised the temperature needed to form a complex three dimensional shape.

The presence of microgrind in concentrated coffee extract created a product that was able to form a complex three dimensional shape. The shapes were formed at temperatures higher than their counterpart samples (same concentration and same foam density) without microgrind. The microgrind is believed to aid in the ability to form a structure (added cellulose and coffee oil which would be solid) and reduce the temperature input needed.

Unless otherwise stated, percentages mentioned herein are by weight.

## Claims

1. A method for forming a coffee article for preparing a coffee beverage, the method comprising:
providing a liquid coffee-extract;
foaming and cooling the liquid coffee-extract to obtain a shape-retaining coffee-extract mousse, and
shaping and freeze-drying the mousse to obtain a coffee article having a mass of from 0.3 to 5g,
wherein the coffee-extract comprises finely ground roasted coffee and the shaping is conducted with the mousse at a temperature of from -8 to -12°C,
wherein the liquid coffee-extract comprises finely ground roasted coffee in an amount of from 1 to 50% by weight of the total coffee solids, and
wherein the finely ground roasted coffee has a D50 of from 5 to 60 microns.

2. The method according to claim 1, wherein before freeze-drying the mousse has a density of from 400g/L to 1000 g/L, preferably from 500g/L to 800 g/L.

3. The method according to any of the preceding claims, wherein the liquid coffee-extract comprises from 30 to 60% coffee solids by weight of the total coffee-extract.

4. The method according to claim 1, wherein the liquid coffee-extract comprises finely ground roasted coffee in an amount of from 5 to 25% by weight of the total coffee solids.

5. The method according to any of the preceding claims, wherein the step of foaming the liquid-coffee extract is by injection of gas into the liquid coffee-extract.

6. The method according to any of the preceding claims, wherein the liquid coffee-extract is simultaneously cooled and foamed.

7. The method according to any of the preceding claims, wherein the step of shaping comprises forming a plurality of discrete coffee articles having a mass of from 1 to 2g.

8. The method according to any of the preceding claims, wherein the shaping is by extrusion.

9. The method according to any of the preceding claims, further comprising a step of packaging the coffee article.

10. A method for preparing a coffee beverage, the method comprising:
contacting one or more coffee articles prepared according to the method of any of claims 1 to 9, with an aqueous beverage medium.

11. The use of a finely ground roasted coffee in a shaped coffee-extract to increase the temperature at which the extract is self-supporting before freeze-drying,
wherein the extract is both shapeable and able to hold a given shape for at least 20 seconds after shaping,
wherein the shaped coffee-extract comprises finely ground roasted coffee in an amount of from 1 to 50% by weight of the total coffee solids, and
wherein the finely ground roasted coffee has a D50 of from 5 to 60 microns.

## Patentansprüche

1. Verfahren zum Bilden eines Kaffeeartikels zum Zubereiten eines Kaffeegetränks, das Verfahren umfassend:
Bereitstellen eines flüssigen Kaffeeextrakts;
Aufschäumen und Kühlen des flüssigen Kaffeeextrakts, um eine formbeständige Kaffeeextrakt-Mousse zu erhalten, und
Formgeben und Gefriertrocknen der Mousse, um einen Kaffeeartikel mit einer Masse von 0,3 bis 5 g zu erhalten,
wobei der Kaffeeextrakt fein gemahlenen, gerösteten Kaffee umfasst und die Formgebung mit der Mousse bei einer Temperatur von -8 bis -12 °C durchgeführt wird,
wobei der flüssige Kaffeeextrakt fein gemahlenen, gerösteten Kaffee in einer Menge von 1 bis 50 Gew.-% der gesamten Kaffeefeststoffe umfasst, und
wobei der fein gemahlene, geröstete Kaffee eine D50 von 5 bis 60 Mikrometer aufweist.

2. Verfahren nach Anspruch 1, wobei die Mousse vor dem Gefriertrocknen eine Dichte von 400 g/l bis 1000g/l, vorzugsweise von 500g/l bis 800g/l, aufweist.

3. Verfahren nach einem der vorstehenden Ansprüche, wobei der flüssige Kaffeeextrakt zu von 30 bis 60 Gew.-% Kaffeefeststoffe des gesamten Kaffeeextrakts umfasst.

4. Verfahren nach Anspruch 1, wobei der flüssige Kaffeeextrakt fein gemahlenen, gerösteten Kaffee in einer Menge von 5 bis 25 Gew.-% der gesamten Kaffeefeststoffe umfasst.

5. Verfahren nach einem der vorstehenden Ansprüche, wobei der Schritt des Aufschäumens des flüssigen Kaffeeextrakts durch Injektion von Gas in den flüssigen Kaffeeextrakt erfolgt.

6. Verfahren nach einem der vorstehenden Ansprüche, wobei der flüssige Kaffeeextrakt gleichzeitig gekühlt und aufgeschäumt wird.

7. Verfahren nach einem der vorstehenden Ansprüche, wobei der Schritt des Formgebens das Bilden einer Vielzahl von separaten Kaffeeartikeln mit einer Masse von 1 bis 2 g umfasst.

8. Verfahren nach einem der vorstehenden Ansprüche, wobei das Formgeben durch Extrusion erfolgt.

9. Verfahren nach einem der vorstehenden Ansprüche, ferner umfassend einen Schritt des Verpackens des Kaffeeartikels.

10. Verfahren zum Herstellen eines Kaffeegetränks, das Verfahren umfassend:
Inkontaktbringen eines oder mehrerer Kaffeeartikel, die nach dem Verfahren nach einem der Ansprüche 1 bis 9 hergestellt sind, mit einem wässrigen Getränkemedium.

11. Verwendung eines fein gemahlenen, gerösteten Kaffees in einem geformten Kaffeeextrakt, um die Temperatur zu erhöhen, bei der der Extrakt vor dem Gefriertrocknen selbsttragend ist,
wobei der Extrakt sowohl formbar und in der Lage ist, eine gegebene Form für mindestens 20 Sekunden nach dem Formgeben zu halten,
wobei der geformte Kaffeeextrakt fein gemahlenen, gerösteten Kaffee in einer Menge zu von 1 bis 50 Gew.-% der gesamten Kaffeefeststoffe umfasst, und
wobei der fein gemahlene, geröstete Kaffee eine D50 von 5 bis 60 Mikrometer aufweist.

## Revendications

1. Procédé de formation d'un article à base de café pour la préparation d'une boisson au café, le procédé comprenant :
la fourniture d'un extrait de café liquide ;
le moussage et le refroidissement de l'extrait de café liquide pour obtenir une mousse d'extrait de café à rétention de forme, et
le façonnage et la lyophilisation de la mousse pour obtenir un article à base de café ayant une masse de 0,3 à 5 g,
l'extrait de café comprenant du café torréfié finement moulu et le façonnage étant conduit avec la mousse à une température de -8 à -12 °C,
l'extrait de café liquide comprenant du café torréfié finement moulu en une quantité de 1 à 50 % en poids des solides de café totaux, et
le café torréfié finement moulu ayant un D50 de 5 à 60 microns.

2. Procédé selon la revendication 1, dans lequel avant la lyophilisation, la mousse a une densité de 400 g/L à 1000 g/L, de préférence de 500 g/L à 800 g/L.

3. Procédé selon l'une quelconque des revendications précédentes, dans lequel l'extrait de café liquide comprend 30 à 60 % de solides de café en poids par rapport à l'extrait de café total.

4. Procédé selon la revendication 1, dans lequel l'extrait de café liquide comprend du café torréfié finement moulu en une quantité de 5 à 25 % en poids par rapport aux solides de café totaux.

5. Procédé selon l'une quelconque des revendications précédentes, dans lequel l'étape de moussage de l'extrait de café liquide est effectuée par injection de gaz dans l'extrait de café liquide.

6. Procédé selon l'une quelconque des revendications précédentes, dans lequel l'extrait de café liquide est refroidi et moussé simultanément.

7. Procédé selon l'une quelconque des revendications précédentes, dans lequel l'étape de façonnage comprend la formation d'une pluralité d'articles discrets à base de café ayant une masse de 1 à 2 g.

8. Procédé selon l'une quelconque des revendications précédentes, dans lequel le façonnage s'effectue par extrusion.

9. Procédé selon l'une quelconque des revendications précédentes, comprenant en outre une étape de conditionnement de l'article à base de café.

10. Procédé de préparation d'une boisson au café, le procédé comprenant :
la mise en contact d'un ou plusieurs articles à base de de café préparés selon le procédé de l'une quelconque des revendications 1 à 9, avec un milieu buvable aqueux.

11. Utilisation d'un café torréfié finement moulu dans un extrait de café façonné pour augmenter la température à laquelle l'extrait est autoportant avant la lyophilisation,
l'extrait étant à la fois façonnable et pouvant conserver une forme donnée pendant au moins 20 secondes après le façonnage,
l'extrait de café façonné comprenant du café torréfié finement moulu en une quantité de 1 à 50 % en poids par rapport aux solides de café totaux, et
le café torréfié finement moulu ayant un D50 de 5 à 60 microns.
